# EUROPÄISCHE PATENTSCHRIFT

(11) **EP 1 053 265 B1**
(45) Veröffentlichungstag und Bekanntmachung des Hinweises auf die Patenterteilung: **30.07.2003**
(21) Anmeldenummer: 99904825.9
(22) Anmeldetag: 29.01.1999
(51) Int. Cl.: C08F 10/06, C08L 23/10, B65D 1/02

(54) **VERFAHREN ZUR HERSTELLUNG VON SPRITZSTRECKGEBLASENEN BEHÄLTERN AUS OLEFINPOLYMERISATEN**
PROCESS FOR THE PREPARATION OF INJECTION-STRETCH-BLOW MOULDED CONTAINERS MADE OF OLEFIN POLYMERS
PROCEDE DE PREPARATION DE RECIPIENTS MOULES PAR INJECTION-SOUFFLAGE AVEC ETIRAGE ET CONSTITUES DE POLYMERES OLEFINIQUES

(30) Priorität: 11.02.1998 DE 19805329
(43) Veröffentlichungstag der Anmeldung: 22.11.2000
(73) Patentinhaber: Basell Polyolefine GmbH, 50389 Wesseling (DE)
(72) Erfinder: MARCZINKE, Bernd, Lothar, D-67354 Heiligenstein (DE); JONES, Peter John Vaughan, Cleveland (GB); KERSTING, Meinolf, D-67435 Neustadt (DE); FISCHER, David, D-67725 Breunigweiler (DE); LANGHAUSER, Franz, D-67152 Ruppertsberg (DE); MOLL, Ulrich, D-67487 St Martin (DE); BIDELL, Wolfgang, D-67112 Mutterstadt (DE)
(86) Internationale Anmeldenummer: EP9900578
(87) Internationale Veröffentlichungsnummer: WO99041293

(56) Entgegenhaltungen:
- EP-A- 0 151 741
- EP-A- 0 516 018
- WO-A-97/11775
- WO-A-97/19991
- WO-A-97/31035
- PATENT ABSTRACTS OF JAPAN vol. 096, no. 004, 30. April 1996 & JP 07 331021 A (SEKISUI CHEM CO LTD), 19. Dezember 1995 & DATABASE WPI Week 9608 Derwent Publications Ltd., London, GB; AN 96-075089 & JP 07 331021 A (SEKISUI CHEM IND CO LTD) , 19. Dezember 1995

## Beschreibung

Die vorliegende Erfindung betrifft Verfahren zur Herstellung von spritzstreckgeblasenen Behältern aus Olefinpolymerisaten, enthaltend Homopolymerisate des Propylens oder Copolymerisate des Propylens mit anderen C₂-C₁₀-Alk-1-enen, die durch Polymerisation der entsprechenden Monomere mit Metallocenkatalysatoren erhalten werden.

Behälter und Flaschen aus Olefinpolymerisaten haben wegen ihrer hervorragenden Wärme- und Chemikalienbeständigkeit, ausgezeichneten Steifigkeit und Zähigkeit sowie ihrer Wirtschaftlichkeit eine breite Verwendung beispielsweise als Verpackungen von Lebensmitteln, Haushaltsartikeln oder Kosmetika oder in der Medizin gefunden. Um zu Behältern mit ausreichender Transparenz zu gelangen, wurde das Spritzstreckblasen (Injection Stretch Blow Moulding; ISBM) entwickelt.

Spritzstreckblasverfahren sind seit längerer Zeit bekannt. Die US-A 4 357 288 lehrt ein Verfahren, bei dem man zunächst aus einem kristallinen Polypropylen bei einer Temperatur, die nur unwesentlich höher ist als die niedrigste Temperatur, bei der eine klare Schmelze erhalten wird, einen Vorformling spritzgießt und diesen dann bis zum Verfestigen abkühlt. Anschließend wird der Vorformling erneut bis zu einer Temperatur gerade unterhalb der amorphen Fließtemperatur erwärmt und streckgeblasen.

Die EP-A 151 741 beschreibt ein drei Schritte umfassendes Verfähren zur Herstellung von Behältern aus Propylenpolymerisaten, bei dem zunächst ein Vorformling spritzgegossen wird. Der wesentliche Schritt ist dann, daß dieser in einem speziellen Temperaturbereich vorgeblasen und erst anschließend streckgeblasen wird. Geeignete Polymerisate sind Propylencopolymerisate mit einem Comonomergehalt von 1 bis 6 Gew.-% und einem Schmelze-Fließindex von 4 bis 50 g/10 min. Diese Schrift lehrt auch, daß man zur Verbesserung der Transparenz den Polymerisaten Nukleierungsmittel wie Dibenzylidensorbitol oder ein Derivat davon in Mengen bis 1 Gew.-% zusetzen kann.

Die EP-A 309 138 betrifft ein Verfahren zur Herstellung von Behältern aus Propylencopolymerisaten, bei dem Propylen-Ethylen-Copolymerisate mit einem Ethylen-Gehalt zwischen 0,5 und 8 Gew.-% und einer Schmelze-Fließrate größer 50 g/min eingesetzt werden. Auf den Schritt des Vorblasens kann verzichtet werden, vorausgesetzt der im ersten Schritt durch Spritzgießen hergestellte Vorformling ist in einem teilgeschmolzenen Zustand, wenn er in die Streckblaseinrichtung überführt wird. Allerdings darf er nicht mehr soweit aufgeschmolzen sein, daß er sich verformt, wenn er aus der Spritzgußform entfernt wird. Dies bedeutet, an der inneren und der äußeren Oberfläche des Vorformlings muß sich jeweils eine dünne Hautschicht eines kristallinen Materials gebildet haben und der Bereich dazwischen muß im teilkristallinen bzw. teilamorphen Zustand verbleiben, damit man zu den gewünschten Eigenschaften des Endprodukts gelangt.

Die bei diesem Verfahren verwendeten Polymerisate werden durch peroxidischen Abbau erhalten. Hierdurch wird zum einen die Schmelze-Fließrate erhöht und zum anderen die Molmassenverteilung, ausgedrückt z.B. durch das Verhältnis M_{w}/Mₙ, erniedrigt. Dies bewirkt eine Verkürzung der Zykluszeiten. Allerdings werden durch den peroxidischen Abbau auch die löslichen Anteile erhöht und die mechanischen Eigenschaften verschlechtert.

In Kunststoffe 84, 1994, Seiten 1415 - 1418, wird von H. Heyn ein Zwei-Stufen-Spritzstreckblasverfahren beschrieben, bei dem separat spritzgegossene Polypropylen-Vorformlinge nach erneuter Erwärmung zu Hohlkörpern verarbeitet werden.

Die US-A 5 637 367 beschreibt ein Herstellverfahren für blasgeformte Behälter, bei dem ein mit einem Metallocenkatalysator hergestelltes syndiotaktisches Polypropylenharz zuerst in eine zylindrische Form gebracht und dann aufgeblasen wird.

Gemeinsam ist den bekannten Spritzstreckblasverfahren zur Herstellung von transparenten Behältern, daß genau definierte, enge Temperaturbereiche während des Herstellungsprozesses eingehalten werden müssen. Insbesondere für Propylenhomopolymerisate ist dieses Temperaturfenster so gering, daß eine problemlose Herstellung von Behältern oder anderen Artikeln im Dauerbetrieb nicht gewährleistet ist, denn schon geringe Abweichungen von einer der vorgegebenen Temperaturen führen zu Produkten mit deutlich verschlechterten Eigenschaften. Durch den Einsatz von Propylencopolymerisaten wird zwar das Temperaturfenster etwas verbreitert, für eine völlig problemlose Behälter-Herstellung ist es jedoch immer noch nicht ausreichend. Außerdem werden durch die Copolymerisation die löslichen Anteile angehoben und die Steifigkeit verschlechtert.

Der vorliegenden Erfindung lag daher die Aufgabe zugrunde, den geschilderten Nachteilen abzuhelfen und insbesondere ein Verfahren zur Herstellung von Behältern, die hervorragende Transparenz kombiniert mit guten mechanischen Eigenschaften und geringen löslichen Anteilen aufweisen, bereitzustellen, das ein breites Temperaturfenster aufweist und kurze Zykluszeiten ermöglicht.

Demgemäß wurde ein Verfahren zur Herstellung von spritzstreckgeblasenen Behälter aus Olefinpolymerisaten, enthaltend mindestens 40 Gew.-% Homopolymerisate des Propylens oder Copolymerisate des Propylens mit anderen C₂-C₁₀-Alk-1-enen, die durch Polymerisation der entsprechenden Monomere mit speziellen Metallocenkatalysatoren erhalten werden, gefunden.

Unter Olefinpolymerisaten sollen Homo- oder Copolymerisate von linearen oder verzweigten a-Olefinen, insbesondere von C₂-C₁₀-Alk-1-en wie Ethylen, Propylen, But-1-en, Pent-1-en, Hex-1-en, Hept-1-en, Oct-1-en, Non-1-en, Dec-1-en oder 4-Methyl-pent-1-en oder Gemischen aus diesen a-Olefinen, verstanden werden. Bevorzugt sind Homo- oder Copolymerisate des Ethylens oder des Propylens, wobei der Anteil an Ethylen oder an Propylen in den Copolymerisaten mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten. Die Propylencopolymerisate können die anderen α-Olefine statistisch eingebaut enthalten. Es ist auch möglich, daß sie in Form sogenannter Block- oder Impactcopolymerisate vorliegen. Bevorzugte Polymerisate des Propylens sind Propylenhomopolymerisate und statistische Propylencopolymerisate. Solche Olefinpolymerisate sind an sich bekannt oder können nach bekannten Methoden durch Polymerisation mit konventionellen Ziegler-Natta-Katalysatoren oder Metallocenkatalysatoren hergestellt werden.

Die Olefinpolymerisate, aus denen die erfindungsgemäßen spritzstreckgeblasenen Behälter bestehen, enthalten Propylenpolymerisate, die durch Polymerisation der entsprechenden Monomere mit speziellen Metallocenkatalysatoren erhalten werden. Der Anteil der Propylenpolymerisate, die mit diesen Metallocenkatalysatoren erhalten werden, beträgt mindestens 40 Gew.-%, bevorzugt mindestens 70 Gew.-% und insbesondere mindestens 90 Gew.-% bezogen auf die Olefinpolymerisate. In einer ganz besonders bevorzugten Ausführungsform werden die Olefinpolymerisate ausschließlich durch Homopolymerisation des Propylens oder Copolymerisation des Propylens mit anderen C₂-C₁₀-Alk-1-enen mit diesen Metallocenkatalysatoren erhalten.

Die Propylenpolymerisate, die mit Metallocenkatalysatoren erhalten werden, sind Propylenhomopolymerisate oder Copolymerisate aus Propylen und einem anderen C₂-C₁₀-Alk-1-en oder mehreren anderen C₂-C₁₀-Alk-1-enen, bevorzugt ausgewählt aus der Gruppe bestehend aus Ethylen, But-1-en, Pent-1-en, Hex-1-en, Hept-1-en, Oct-1-en, Non-1-en, Dec-1-en und 4-Methyl-pent-1-en, oder sie sind Mischungen dieser Polymerisate, wobei die Mischungsverhältnisse nicht kritisch sind. Als Copolymerisate des Propylens werden im allgemeinen statistische Copolymerisate verwendet.

Erfindungsgemäß geeignete Metallocenkatalysatoren enthalten als aktive Bestandteile
A) einen oder mehrere Metallocenkomplexe der allgemeinen Formel (Ic), 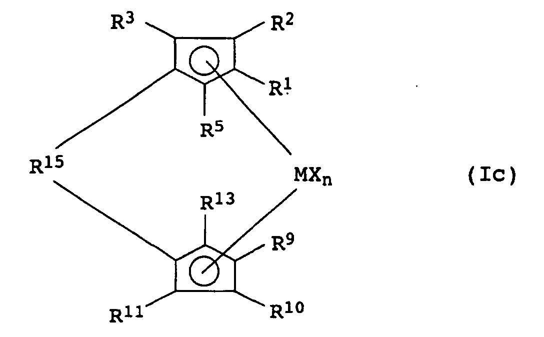 in der die Substituenten und Indizes folgende Bedeutung haben:
   - M: Titan, Zirkonium, Hafnium, Vanadium, Niob oder Tantal, sowie Elemente der III. Nebengruppe des Periodensystems und der Lanthanoiden,
   - X: Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁶ oder -NR⁶R⁷,
   - n: 1, 2 oder 3, wobei n der Wertigkeit von M minus der Zahl 2 entspricht,
   wobei
   - R⁶ und R⁷: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
   die Reste X gleich oder verschieden sind,
   - R¹, R⁵, R⁹ und R¹³: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl oder Si(R⁸)₃ mit
   - R⁸: C₁-C₁₀-Alkyl, C₃-C₁₀-Cycloalkyl oder C₆-C₁₅-Aryl sein kann und
   - _{R}15: 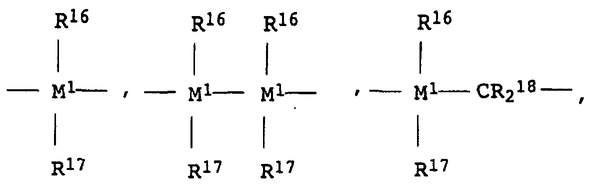 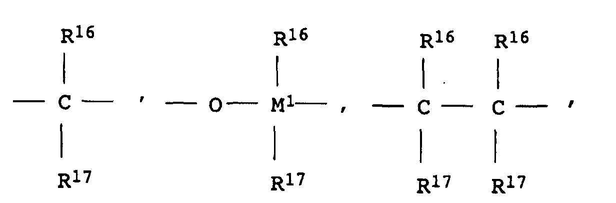 = BR¹⁶, = AlR¹⁶, -Ge-, -Sn-, -O-, -S-, = SO, = S0₂,
   = NR¹⁶, = CO, = PR¹⁶ oder = P(O)R¹⁶ ist,
   wobei
   - R¹⁶, R¹⁷ und R¹⁸: gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Aryl-gruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
   - M¹: Silicium, Germanium oder Zinn ist,
   und wobei zwei benachbarte Reste R² und R³ und zwei benachbarte Reste R¹⁰ und R¹¹ jeweils gemeinsam für eine 4 bis 15 C-Atome aufweisende gesättigte oder ungesättigte cyclische Gruppe stehen, und
B) eine oder mehrere metalloceniumionenbildende Verbindungen. Bevorzugt sind die Reste X in der allgemeinen Formel (Ic) gleich.

Von den Verbindungen der Formel (Ic) sind diejenigen besonders geeignet, in denen
- R¹ und R⁹: gleich sind und für Wasserstoff oder C₁-C₁₀-Alkyl-gruppen stehen,
- R⁵ und R¹³: gleich sind und für Wasserstoff, eine Methyl-, Ethyl-, iso-Propyl- oder tert.-Butylgruppe stehen,
- R³ und R¹¹: C₁-C₄-Alkyl und
- R² und R¹⁰: Wasserstoff bedeuten
oder
zwei benachbarte Reste R² und R³ sowie R¹⁰ und R¹¹ gemeinsam für 4 bis 12 C-Atome aufweisende gesättigte oder ungesättigte cyclische Gruppen stehen,
- _{R}15: 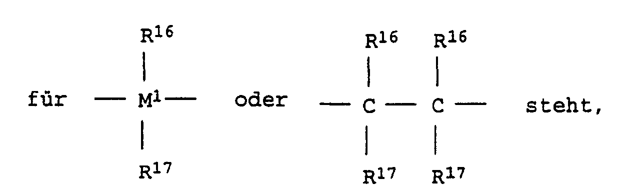
- M: für Titan, Zirkonium oder Hafnium und
- X: für Chlor, C₁-C₄-Alkyl oder Phenyl stehen.

Beispiele für besonders geeignete Komplexverbindungen sind u.a. Dimethylsilandiylbis(cyclopentadienyl)zirkoniumdichlorid, Dimethylsilandiylbis(indenyl)zirkoniumdichlorid, Dimethylsilandiylbis(tetrahydroindenyl)zirkoniumdichlorid, Ethylenbis(cyclopentadienyl)zirkoniumdichlorid, Ethylenbis(indenyl)zirkoniumdichlorid, Ethylenbis(tetrahydroindenyl)zirkoniumdichlorid, Tetramethylethylen-9-fluorenylcyclopentadienylzirkoniumdichlorid, Dimethylsilandiylbis(3-tert.butyl-5-methylcyclopentadienyl)-zirkoniumdichlorid, Dimethylsilandiylbis(3-tert.butyl-5-ethylcyclopentadienyl)-zirkoniumdichlorid, Dimethylsilandiylbis (2-methylindenyl)zirkoniumdichlorid, Dimethylsilandiylbis(2-isopropylindenyl)zirkoniumdichlorid, Dimethylsilandiylbis (2-tert.butylindenyl) zirkoniumdichlorid, Diethylsilandiylbis(2-methylindenyl)zirkoniumdibromid, Dimethylsilandiylbis(3-methyl-5-methylcyclopentadienyl)-zirkoniumdichlorid, Dimethylsilandiylbis(3-ethyl-5-isopropylcyclopentadienyl)-zirkoniumdichlorid, Dimethylsilandiylbis(2-ethylindenyl)zirkoniumdichlorid, Dimethylsilandiylbis[3,3'-(2-methylbenzindenyl)]-zirkoniumdichlorid Dimethylsilandiylbis[3,3'-(2-ethylbenzindenyl)]-zirkoniumdichlorid, Methylphenylsilandiylbis[3,3'-(2-ethylbenzindenyl)]-zirkoniumdichlorid, Methylphenylsilandiylbis[3,3'-(2-methylbenzindenyl)]-zirkoniumdichlorid, Diphenylsilandiylbis[3,3'-(2-methylbenzindenyl)]-zirkoniumdichlorid, Diphenylsilandiylbis[3,3'-(2-ethylbenzindenyl)]-zirkoniumdichlorid, und Diphenylsilandiylbis(2-methylindenyl)hafniumdichlorid sowie die entsprechenden Dimethylzirkoniumverbindungen.

Weitere Beispiele für geeignete Komplexverbindungen sind u.a. Dimethylsilandiylbis(2-methyl-4-phenylindenyl)zirkoniumdichlorid, Dimethylsilandiylbis(2-methyl-4-naphthylindenyl)zirkoniumdichlorid, Dimethylsilandiylbis(2-methyl-4-isopropylindenyl)zirkoniumdichlorid und Dimethylsilandiylbis(2-methyl-4,6-diisopropylindenyl)zirkoniumdichlorid sowie die entsprechenden Dimethylzirkoniumverbindungen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionenbildende Verbindungen B) sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (II)

M²X¹X²X³ (II)

bevorzugt, in der
- M²: ein Element der III. Hauptgruppe des Perioden-systems bedeutet, insbesondere B, Al oder Ga, vorzugsweise B,
- X¹, X² und X³: für Wasserstoff, C₁-C₁₀-Alkyl, C₆-C₁₅-Aryl, Alkyl-aryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogen-aryle, vorzugsweise für Pentafluorphenyl.

Besonders bevorzugt sind Verbindungen der allgemeinen Formel (II), in der X¹, X² und X³ gleich sind, vorzugsweise Tris(pentafluorphenyl)boran.

Als ionische Verbindungen mit lewissauren Kationen sind Verbindungen der allgemeinen Formel (III)

[(Y^{a+}) Q₁Q₂...Q_{z}]^{d+} (III)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 10 Äquivalente, bezogen auf den Metallocenkomplex A).

Besonders geeignet als metalloceniumionenbildende Verbindung B) sind offenkettige oder cyclische Alumoxanverbindungen der allgemeinen Formeln (IV) oder (V) 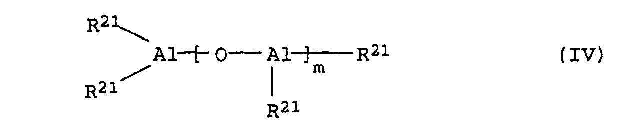 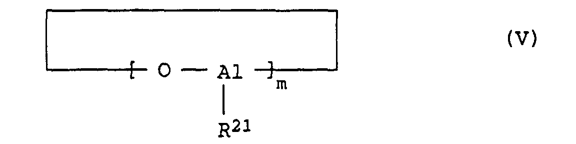 wobei
- R²¹: eine C₁-C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe A) und die oligomeren Alumoxanverbindungen der allgemeinen Formeln (IV) oder (V) in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis 10⁶:1, insbesondere im Bereich von 10:1 bis 10⁴:1, liegt.

Weiterhin können als Komponente B) anstelle der Alumoxanverbindungen der allgemeinen Formeln (IV) oder (V) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Vorzugsweise werden sowohl die Metallocenkomplexe A) als auch die metalloceniumionenbildende Verbindungen B) in Lösung eingesetzt, wobei aromatische Kohlenwasserstoffe mit 6 bis 20 C-Atomen, insbesondere Xylole und Toluol, besonders bevorzugt sind.

Geeigneten Metallocenkatalysatoren können als weitere Komponente C) zusätzlich noch eine Metallverbindung der allgemeinen Formel (VI)

M³ (R²²)ᵣ (R²³)ₛ (R²⁴)ₜ (VI)

in der
- M³: ein Alkali-, ein Erdalkalimetall oder ein Metall der III. Hauptgruppe des Periodensystems, d.h. Bor, Aluminium, Gallium, Indium oder Thallium bedeutet,
- R²²: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R²³ und R²⁴: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M³ entspricht,
enthalten.

Von den Metallverbindungen der allgemeinen Formel (VI) sind diejenigen bevorzugt, in denen
- M³: Lithium, Magnesium oder Aluminium bedeutet und
- R²³ und R²⁴: für C₁-C₁₀-Alkyl stehen.

Besonders bevorzugte Metallverbindungen der Formel (VI) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn eine Metallverbindung C) eingesetzt wird, ist sie bevorzugt in einer solchen Menge im Katalysatorsystem enthalten, daß das molare Verhältnis von M³ aus Formel (VI) zu Übergangsmetall M aus Formel (I) von 800:1 bis 1:1, insbesondere 500:1 bis 50:1, beträgt.

Die Metallocenkomplexe A) können auch auf einem Trägermaterial eingesetzt werden.

Als Trägermaterialien werden vorzugsweise feinteilige Träger eingesetzt, die im allgemeinen einen Teilchendurchmesser im Bereich von 1 bis 300 µm aufweisen, insbesondere von 20 bis 90 µm. Geeignete Trägermaterialien sind beispielsweise anorganische Oxide des Siliciums, des Aluminiums, des Titans oder eines der Metalle der I. oder II. Hauptgruppe des Periodensystems, von denen außer Aluminiumoxid oder Magnesiumoxid oder einem Schichtsilikat insbesondere Kieselgel bevorzugt ist.

Bevorzugte Trägermaterialien setzen sich aus sogenannten Primärpartikeln mit mittleren Teilchendurchmessern von 1 bis 20 µm, insbesondere von 1 bis 5 µm, zusammen und weisen Hohlräume und Kanäle mit einem mittleren Durchmesser von 0,1 bis 20 µm, insbesondere 1 bis 15 µm, auf, wobei der makroskopische Volumenanteil der Hohlräume und Kanäle am Gesamtpartikel von 8 bis 30 %, bevorzugt von 10 bis 30 % und insbesondere von 15 bis 25 % beträgt. Solche bevorzugten Trägermaterialien werden beispielsweise durch Sprühtrocknung geeigneter Primärpartikelsuspensionen erhalten.

Weitere Träger sind u.a. feinteilige Polyolefine, beispielsweise feinteiliges Polypropylen.

Die Herstellung der mit den Metallocenkatalysatoren erhaltenen Propylenpolymerisate kann in den üblichen, für die Polymerisation von Olefinen verwendeten Reaktoren entweder diskontinuierlich oder vorzugsweise kontinuierlich erfolgen. Geeignete Reaktoren sind unter anderem kontinuierlich betriebene Rührkessel, wobei man gegebenenfalls auch eine Reihe von mehreren hintereinandergeschalteten Rührkesseln verwenden kann. Die Polymerisationsreaktionen lassen sich in der Gasphase, in Suspension, in flüssigen und in überkritischen Monomeren oder in inerten Lösungsmitteln durchführen.

Die Polymerisationsbedingungen sind an sich unkritisch. Drücke von 1 bis 3500 bar, vorzugsweise von 2 bis 100 bar sowie Temperaturen von 0 bis 400°C, vorzugsweise 20 bis 250°C und insbesondere 50 bis 100°C haben sich als geeignet erwiesen.

Vorzugsweise führt man die Homopolymerisationen des Propylens oder die Copolymerisationen des Propylens mit C₂-C₁₀-Alk-1-enen in der Gasphase durch, beispielsweise in Wirbelschichtreaktoren oder in gerührten Pulverbettreaktoren. Gut geeignete Verfahrensbedingungen hierfür sind Polymerisationsdrücke im Bereich von 10 bis 40 bar und Polymerisationstemperaturen im Bereich von 50 bis 100°C. Selbstverständlich kann die Polymerisation auch in einer Reihe von mehreren, vorzugsweise zwei, hintereinander geschalteten Reaktoren erfolgen.

Die mittlere Molmasse der Polymerisate kann mit den in der Polymerisationstechnik üblichen Methoden gesteuert werden, beispielsweise durch Zufuhr von Molmassenreglern, wie Wasserstoff, welche zu einer Reduzierung der Molmasse des Polymerisats führt oder durch Variation der Polymerisationstemperatur, wobei hohe Polymerisationstemperaturen üblicherweise ebenfalls zu reduzierten Molmassen führen.

Die mit den Metallocenkatalysatoren erhaltenen Homopolymerisate des Propylens oder der Copolymerisate des Propylens mit C₂-C₁₀-Alk-1-enen haben im allgemeinen eine Schmelze-Fließrate (Melt Flow Rate, MFR), gemessen bei 230°C und unter einem Gewicht von 2,16 kg nach ISO 1133, im Bereich von 0,1 bis 1000 g/10 min, vorzugsweise im Bereich von 0,5 bis 200 g/10 min, insbesondere im Bereich von 1 bis 100 g/10 min und ganz besonders bevorzugt im Bereich von 2 bis 50 g/10 min. Solche Schmelze-Fließraten entsprechen üblicherweise mittleren Molmassen (Gewichtsmittel M_{w}) der Propylenpolymerisate, gemessen mit der Methode der Gelpermeationschromatographie (GPC) bei 140°C in 1,2,4-Trichlorbenzol gegen Polypropylenstandard, im Bereich von 50 000 bis 1 000 000 g/mol.

Die Molmassenverteilung M_{w}/Mₙ der mit den Metallocenkatalysatoren erhaltenen Homopolymerisate des Propylens oder der Copolymerisate des Propylens mit C₂-C₁₀-Alk-1-enen, bestimmt wie die mittlere Molmasse M_{w} mittels GPC, liegt im allgemeinen im Bereich von 1,2 bis 6,0 vorzugsweise im Bereich von 1,5 bis 3,0.

Sowohl die Molmasse M_{w}, die Molmassenverteilung M_{w}/Mₙ, sowie insbesondere der MFR-Wert können auch mit der Methode des peroxidisch initiierten Abbaus eines Ausgangspolymerisats, vorteilhaft in einem Extruder, eingestellt werden. Diese Methode ist dem Fachmann bekannt.

Die mit den Metallocenkatalysatoren erhaltenen Propylenhomopolymerisate haben im allgemeinen eine Schmelztemperatur, bestimmt mit der Methode der Differential Scanning Calorimetrie (DSC) (Aufheizrate 20°C/min), im Bereich von 80 bis 165°C, vorzugsweise im Bereich von 100 bis 165°C und insbesondere im Bereich von 120 bis 165°C.

Die Copolymerisate des Propylens mit anderen C₂-C₁₀-Alk-1-enen haben im allgemeinen eine durch DSC (Aufheizrate 20°C/min) bestimmte Schmelztemperatur im Bereich von 60 bis 160°C, vorzugsweise im Bereich von 100 bis 160°C und insbesondere im Bereich von 120 bis 160°C.

Der chemisch gebundene Comonomeranteil der Copolymerisate des Propylens mit anderen C₂-C₁₀-Alk-1-enen, gemessen beispielsweise mit der Methode der ¹³C-NMR-Spektroskopie, liegt im allgemeinen im Bereich von 0,001 bis 35 mol-%, vorzugsweise im Bereich von 0,01 bis 15 mol-%, bezogen auf das Copolymerisat.

Im Sinne der Erfindung sehr gut geeignete Propylenhomopolymerisate oder Copolymerisate des Propylens mit anderen C₂-C₁₀-Alk-1-enen erhält man, wenn man die entsprechenden Monomere in Gegenwart eines Metallocenkatalysators polymerisiert, welcher Dimethylsilandiylbis(3,3'-(2-methylbenzindenyl)]-zirkoniumdichlorid als Metallocenkomplex (Ic) enthält.

Die so erhaltenen Propylen-Homo- oder Copolymerisate haben dann in der Regel die bereits vorher genannten Polymereigenschaften wie MFR, M_{w}, M_{w}/Mₙ, Schmelzpunkt, Pentadengehalt und Comonomergehalt.

Bevorzugte mit dem Dimethylsilandiylbis[3,3'-(2-methylbenzindenyl)]zirkoniumdichlorid-Katalysator erhaltene Copolymerisate des Propylens mit anderen C₂-C₁₀-Alk-1-enen, sind statistische Copolymerisate aus Propylen und Ethylen mit 0,1 % bis 10 mol-%, vorzugsweise 0,2 bis 7 mol-%, bezogen auf das Polymer, vom Ethylen abgeleiteten Einheiten, statistische Copolymerisate aus Pröpylen und But-1-en mit 0,5 bis 20 mol-%, vorzugsweise 1 bis 15 mol-%, bezogen auf das Polymer, vom But-1-en abgeleiteten Einheiten, statistische Terpolymerisate aus Propylen, Ethylen und But-1-en mit 0,1 bis 10 mol-%, vorzugsweise 0,2 bis 7 mol-%, bezogen auf das Terpolymer, vom Ethylen abgeleiteten Einheiten und 0,5 bis 20 mol-%, vorzugsweise 1 bis 15 mol-%, bezogen auf das Terpolymer, vom But-1-en abgeleiteten Einheiten.

Die im erfindungsgemäßen Verfahren eingesetzen Olefinpolymerisate können Additive wie Stabilisatoren, Gleit- und Entformungsmittel, Füllstoffe, Antistatika, Weichmacher, Farbstoffe, Pigmente, Flammschutzmittel oder Nukleierungsmittel enthalten, die vor der Anwendung in üblichen Mengen zugesetzt werden. In der Regel werden diese bei der Granulierung des pulverförmig anfallenden Polymerisationsprodukts in das Polymerisat eingearbeitet.

Solche Additive sind in der Regel handelsüblich und werden beispielsweise in Gächter/Müller, Plastics Additives Handbook, 4th Edition, Hansa Publishers, Munich, 1993 beschrieben.

Übliche Stabilisatoren sind Antioxidantien wie sterisch gehinderte Phenole, Verarbeitungsstabilisatoren wie Phosphite oder Phosphonite, Neutralisationsmittel wie Calcium- oder Zinkstearat oder Dihydrotalcit, sterisch gehinderte Amine oder auch UV-Stabilisatoren. Im allgemeinen enthalten die erfindungsgemäßen Polymerisate einen oder mehrere der Stabilisatoren in Mengen bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die statistischen Propylencopolymerisaten kommen z.B. Talkum, Kreide oder Glasfasern in Betracht, wobei hier Mengen bis 50 Gew.-% verwendet werden können.

Bevorzugt im erfindungsgemäßen Verfahren eingesetzte Olefinpolymerisate enthalten zur Verbesserung der Transparenz geeignete Nukleierungsmittel. Übliche Nukleierungsmittel sind beispielsweise anorganische Zusatzstoffe wie Talkum, Kieselsäure oder Kaolin, Salze von Mono- oder Polycarbonsäuren wie Natriumbenzoat oder Aluminium-tert.-butylbenzoat oder Salze von Diestern der Phosphorsäure wie Natrium-2,2'-methylenbis (4,6,-di-tert.-butylphenyl)phosphat. Bevorzugt eingesetzte Nukleierungsmittel sind Dibenzylidensorbitol oder dessen C₁-C₈-alkylsubstituierte Derivate wie Methyl- oder Dimethyldibenzylidensorbitol. Der Gehalt an Nukleierungsmitteln beträgt in der Regel bis 5 Gew.-%, bevorzugt bis 3 Gew.-% und insbesondere bis 1 Gew.-% bezogen auf die Olefinpolymerisate.

Zur erfindungsgemäßen Herstellung der spritzstreckgeblasenen Behälter werden üblicherweise zunächst aus Olefinpolymerisaten, enthaltend Homopolymerisate des Propylens oder Copolymerisate des Propylens mit anderen C₂-C₁₀-Alk-1-enen, die durch Polymerisation der entsprechenden Monomere mit den Metallocenkatalysatoren erhalten werden oder bevorzugt ausschließlich aus mit den Metallocenkatalysatoren erhaltenen Homopolymerisaten des Propylens oder Copolymerisaten des Propylens mit anderen C₂-C₁₀-Alk-1-enen Vorformlinge spritzgegossen und diese daran anschließend streckgeblasen.

Dies kann in einem einstufigen Vorgang geschehen. Dann erfolgen d'as Spritzgießen des Vorformlings und das Streckblasen in der selben Maschine. Der Vorformling wird hierbei schnell auf die Strecktemperatur abgekühlt. Der Vorteil des einstufigen Verfahrens liegt vor allem bei der Energieersparnis.

Es ist auch möglich zweistufig vorzugehen. Dann wird zunächst der Vorformling spritzgegossen. Anschließend läßt man den Vorformling in der Regel auf Raumtemperatur abkühlen, wodurch dieser leicht lagerfähig wird. Für die unabhängige Stufe des Streckblasens wird der Vorformling dann erneut erwärmt. Dieses Zwei-Stufen-Spritzstreckblasverfahren wird deshalb auch häufig als "Reheat-Verfahren" bezeichnet. Vorteilhaft an dem zweistufigen Verfahren ist, daß beide Stufen voneinander unabhängig sind und eine bessere Temperaturführung beim Streckblasen möglich ist.

Bei beiden Varianten ist es möglich, daß das Streckblasen in zwei Schritten durchgeführt wird. Dann wird zunächst in einem ersten Schritt der Vorformling vorgeblasen, und daran anschließend in einem weiteren Schritt streckgeblasen.

Das Spritzgießen des Vorformlings erfolgt bei Schmelzetemperaturen von 200 bis 280°C und das Streckblasen bei Temperaturen von 100 bis 160°C bevorzugt mit einem Streckblasdruck von 10 bis 50 bar und einem Streckverhältnis von 1:2 bis 1:7. Falls ein Vorblasen durchgeführt wird, erfolgt dieses bevorzugt bei Temperaturen von 110 bis 150°C mit einem Vorblasdruck von 1 bis 10 bar und einem Streckverhältnis von 1:2 bis 1:5.

Das erfindungsgemäße Verfahren zeichnet sich unter anderem dadurch aus, daß sich Behälter in einem breiteren Temperaturfenster herstellen lassen als Behälter, die aus Olefinpolymerisaten hergestellt werden, die keine Propylenpolymerisate, die mit Metallocenkatalysatoren erhalten werden, enthalten. Dies ermöglicht einen reibungslosen Dauerbetrieb mit geringem Personalaufwand bei der Fertigung. Außerdem lassen sich die Behälter mit verringerten Zykluszeiten herstellen. Die erfindungsgemäß hergestellten Behälter zeigen gleichmäßige Wanddicken, einen hohen Glanz und eine exzellente Transparenz, die durch Zugabe von Nukleierungsmitteln weiter verbessert werden kann. Die Behälter weisen eine gute Steifigkeit und Zähigkeit auf und und eignen sich bedingt durch den niedrigen Gehalt an löslichen Anteilen insbesondere für Anwendungen auf den Gebieten Lebensmittel und Medizin.

### Beispiele

Es wurden runde Flaschen mit einem Inhalt von einem Liter und einem Eigengewicht von 30 Gramm in einem drei Schritte umfassenden Spritzstreckblasverfahren hergestellt. In einem ersten Schritt wurde zunächst ein Vorformling spritzgegossen, der dann in einem zweiten Schritt aus der Spritzgußform entfernt und in eine Vorblaseinrichtung überführt wurde, wo der Vorformling auf eine vorgegebenen Temperatur gebracht und bei 4 bar vorgeblasen wurde. In einem dritten Schritt wurde der vorgeblasene Vorformling mit einem Druck von 17 bar streckgeblasen.

Die Temperatur des Vorblasschritts wurde im jeweils angegebenen Bereich variiert und die Behälter wurden bezüglich ihrer Transparenz und Gleichmäßigkeit der Form untersucht. Es wurde dabei das Temperaturfenster bestimmt, innerhalb dem kommerziell akzeptable Produkte erhältlich waren.

### Beispiel 1

In einem vertikal gerührten Gasphasenreaktor wurde Propylen bei einer Temperatur von 60°C, einem Druck von 24 bar und einer mittleren Verweilzeit von 1,5 h mittels eines auf Kieselgel fixierten Dimethylsilandiylbis[3,3'-(2-methylbenzindenyl)]-zirkoniumdichlorid/Methylaluminoxankatalysators in Anwesenheit von Wasserstoff als Molmassenregler homopolymerisiert. Es wurde ein Propylenhomopolymerisat mit einer Schmelztemperatur von 147°C, einem MFR (230°C/2,16 kg) von 3,8 g/10 min und einem Verhältnis M_{w}/Mₙ von 2,0 erhalten.

Mit diesem Polymerisat wurden wie oben angegeben Flaschen durch Spritzstreckblasen hergestellt. Die Temperatur des Vorblasschritts wurde im Bereich von 110 bis 130°C variiert. Das Temperaturfenster, in dem hochtransparente Flaschen mit gleichmäßiger Wanddicke erhalten wurden, betrug 8°C.

### Beispiel 2

Analog Beispiel 1 wurde ein Propylen-But-1-en-Copolymerisat mit 3,5 Gew.% But-1-en polymerisiert. Es wies eine Schmelztemperatur von 134°C, einem MFR (230°C/2,16 kg) von 3,8 g/10 min und ein Verhältnis M_{w}/Mₙ von 2,2 auf.

Entsprechend Beispiel 1 wurden Flaschen durch Spritzstreckblasen hergestellt. Die Temperatur des Vorblasschritts wurde im Bereich von 110 bis 130°C variiert. Das Temperaturfenster, in dem hochtransparente Flaschen mit gleichmäßiger Wanddicke erhalten wurden, betrug 12°C.

### Vergleichsbeispiel A

Entsprechend Beispiel 1 wurden mit einem kommerziellen, mit einem konventionellen Ziegler-Natta-Katalysator hergestellten Propylenhomopolymerisat (NOVOLEN® 1100L der BASF Aktiengesellschaft mit einer Schmelztemperatur von 164°C, einem MFR (230°C/2,16 kg) von 6 g/10 min, einem Verhältnis M_{w}/Mₙ von 5 und einem bei Raumtemperatur in Xylol löslichen Anteil von 3 Gew.-%) Flaschen durch Spritzstreckblasen hergestellt. Die Temperatur des Vorblasschritts wurde im Bereich von 140 bis 160°C variiert. Das Temperaturfenster, in dem hochtransparente Flaschen mit gleichmäßiger Wanddicke erhalten wurden, betrug 2°C.

### Vergleichsbeispiel B

Entsprechend Beispiel 2 wurden mit einem kommerziellen, mit einem konventionellen Ziegler-Natta-Katalysator hergestellten Propylencopolymerisat mit 2,5 Gew.-% Ethylen (NOVOLEN® 3200MC der BASF Aktiengesellschaft mit einer Schmelztemperatur von 145°C, einem MFR (230°C/2,16 kg) von 8 g/10 min, einem Verhältnis M_{w}/Mₙ von 4,5 und einem bei Raumtemperatur in Xylol löslichen Anteil von 6,5 Gew.-%) Flaschen durch Spritzstreckblasen hergestellt. Die Temperatur des Vorblasschritts wurde im Bereich von 115 bis 140°C variiert. Das Temperaturfenster, in dem hochtransparente Flaschen mit gleichmäßiger Wanddicke erhalten wurden, betrug 6°C.

## Patentansprüche

1. Verfahren zur Herstellung von spritzstreckgeblasenen Behältern aus Olefinpolymerisaten durch Spritzgießen von Vorformlingen bei Schmelzetemperaturen von 200 bis 280°C und anschließendes Streckblasen der Vorformlinge bei Temperaturen von 100 bis 160°C, **dadurch gekennzeichnet, daß** man Olefinpolymerisate, enthaltend mindestens 40 Gew.-%, bezogen auf die Olefinpolymerisate, Homopolmyerisate des Propylens oder Copolymerisate des Propylens mit anderen C₂-C₁₀-Alk-1-enen, die durch Polymerisation der entsprechenden Monomere mit Metallocenkatalysatoren, enthaltend als aktive Bestandteile
A) einen oder mehrere Metallocenkomplexe der allgemeinen Formel (Ic) 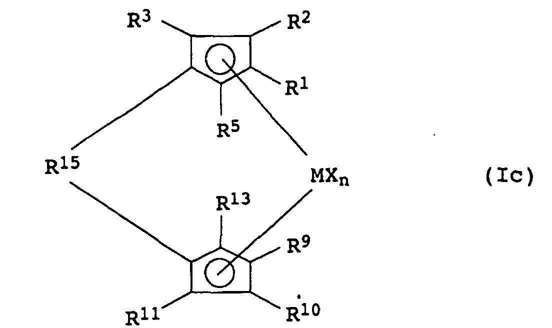 in der die Substituenten und Indizes folgende Bedeutung haben:
M Titan, Zirkonium, Hafnium, Vanadium, Niob oder Tantal, sowie Elemente der III. Neben-gruppe des Periodensystems und der Lantha-noiden,
X Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁶ oder -NR⁶R⁷,
n 1, 2 oder 3, wobei n der Wertigkeit von M minus der Zahl 2 entspricht,
wobei
R⁶ und R⁷ C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
R¹, R⁵, R⁹ und R¹³ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl oder Si(R⁸)₃ mit
R⁸ C₁-C₁₀-Alkyl, C₃-C₁₀-Cycloalkyl oder C₆-C₁₅-Aryl sein kann und
R¹⁵ 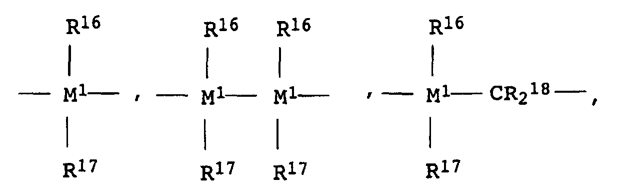 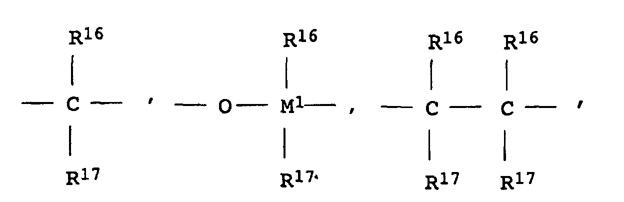 = BR¹⁶, = AlR¹⁶, -Ge-, -Sn-, -O-, -S-, = SO, = SO₂,
= NR¹⁶, = CO, = PR¹⁶ oder = P(0)R¹⁶ ist,
wobei
R¹⁶, R¹⁷ und R¹⁸ gleich oder verschieden sind und jeweils ein Wasserstoffatom, ein Halogenatom, eine C₁-C₁₀-Alkylgruppe, eine C₁-C₁₀-Fluoralkyl- gruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Aryl-alkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist,
und zwei benachbarte Reste R² und R³ und zwei benachbarte Reste R¹⁰ und R¹¹ jeweils gemeinsam für einen 4 bis 15 C-Atome aufweisenden gesättigten oder ungesättigten Ring stehen, und
B) eine oder mehrere metalloceniumionenbildende Verbindungen,
erhalten werden, streckbläst.

2. Verfahren zur Herstellung von spritzstreckgeblasenen Behältern gemäß Anspruch 1, wobei die Olefinpolymerisate Homopolymerisate des Propylens oder Copolymerisate des Propylens mit anderen C₂-C₁₀-Alk-1-enen sind, die durch Polymerisation der entsprechenden Monomere mit Metallocenkatalysatoren erhältlich sind.

3. Verfahren zur Herstellung von spritzstreckgeblasenen Behältern gemäß Anspruch 1 oder 2, wobei die mit Metallocenkatalysatoren erhältlichen Homopolymerisate des Propylens oder Copolymerisaten des Propylens mit anderen C₂-C₁₀-Alk-1-enen einen Schmelzpunkt im Bereich von 120 bis 165°C aufweisen.

4. Verfahren zur Herstellung von spritzstreckgeblasenen Behältern gemäß den Ansprüchen 1 bis 3, wobei die mit Metallocenkatalysatoren erhältlichen Homopolymerisate des Propylens oder Copolymerisaten des Propylens mit anderen C₂-C₁₀-Alk-1-enen eine Schmelze-Fließrate MFR von 2 bis 50 g/10 min, bei 230°C unter einem Gewicht von 2,16 kg, aufweisen.

5. Verfahren zur Herstellung von spritzstreckgeblasenen Behältern gemäß den Ansprüchen 1 bis 4, wobei die Olefinpolymerisate als weitere Komponente Nukleierungsmittel in Mengen bis 5 Gew.-% bezogen auf die Olefinpolymerisate enthalten.

6. Verfahren zur Herstellung von spritzstreckgeblasenen Behältern gemäß den Ansprüchen 1 bis 5, wobei der Metallocenkomplex (Ic) Dimethylsilandiylbis[3,3'-(2-methylbenzindenyl)]zirkoniumdichlorid ist.

## Claims

1. A process for producing injection stretch blow molded containers from olefin polymers by injection molding parisons at melt temperatures of from 200 to 280°C and then stretch blow molding the parisons at from 100 to 160°C, which comprises stretch blow molding olefin polymers comprising at least 40% by weight, based on the olefin polymers, of homopolymers of propylene or copolymers of propylene with other C₂-C₁₀ 1-alkenes, which are obtained by polymerizing the appropriate monomers with metallocene catalysts comprising, as active constituents,
A) one or more metallocene complexes of the general formula (Ic) 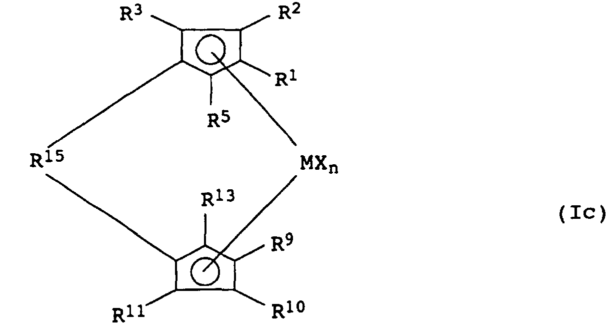 where:
M is titanium, zirconium, hafnium, vanadium, niobium or tantalum, or else elements of the 3rd subgroup of the Periodic Table or of the lanthanoids,
X is fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR⁶ or -NR⁶R⁷,
n is 1, 2 or 3, where n is the valence of M minus the number 2,
where
R⁶ and R⁷ are C₁-C₁₀-alkyl, C₆-C₁₅-aryl, alkylaryl, aryl-alkyl, fluoroalkyl or fluoroaryl having in each case from 1 to 10 carbon atoms in the alkyl radical and from 6 to 20 carbon atoms in the aryl radical, and
the radicals X are identical or different,
R¹, R⁵, R⁹ and R¹³ are hydrogen, C₁-C₁₀-alkyl, 5- to 7-membered cycloalkyl, which in turn may be C₁-C₁₀-alkyl-substituted, C₆-C₁₅-aryl or arylalkyl or Si(R⁸)₃, where
R⁸ may be C₁-C₁₀-alkyl, C₃-C₁₀-cycloalkyl or C₆-C₁₅-aryl, and
R¹⁵ is 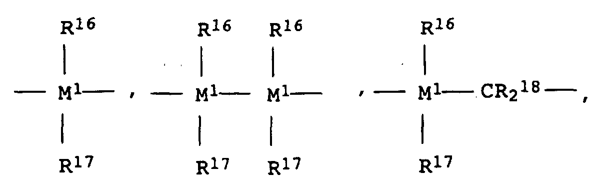 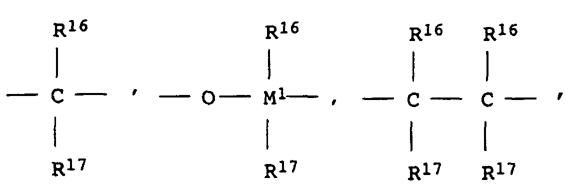 = BR¹⁶, = AlR¹⁶, -Ge-, -Sn-, -O-, -S-, = SO, = SO₂,
= NR¹⁶_{,} = CO, PR¹⁶ or = P(O)R¹⁶,
where
each of R¹⁶, R¹⁷ and R¹⁸ is identical or different and is hydrogen, halogen, C₁-C₁₀-alkyl, C₁-C₁₀-fluoro-alkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl or C₇-C₄₀-alkylaryl, or where two adjacent radicals, in each case with the atoms linking them, form a saturated or unsaturated ring having from 4 to 15 carbon atoms, and
M¹ is silicon, germanium or tin,
and two adjacent radicals R² and R³ and two adjacent radicals R¹⁰ and R¹¹ are in each case together a saturated or unsaturated ring having from 4 to 15 carbon atoms,
and
B) one or more metallocenium-ion-forming compounds.

2. A process for producing injection stretch blow molded containers as claimed in claim 1, where the olefin polymers are homopolymers of propylene or copolymers of propylene with other C₂-C₁₀ 1-alkenes, obtainable by polymerizing the appropriate monomers with metallocene catalysts.

3. A process for producing injection stretch blow molded containers as claimed in claim 1 or 2, where the homopolymers of propylene or copolymers of propylene with other C₂-C₁₀ 1-alkenes, obtainable using metallocene catalysts, have a melting point of from 120 to 165°C.

4. A process for producing injection stretch blow molded containers as claimed in claims 1 to 3, where the homopolymers of propylene or copolymers of propylene with other C₂-C₁₀ 1-alkenes, obtainable using metallocene catalysts, have a melt flow rate MFR of from 2 to 50 g/10 min at 230°C with a load of 2.16 kg.

5. A process for producing injection stretch blow molded containers as claimed in any of claims 1 to 4, where the olefin polymers comprise up to 5% by weight, based on the olefin polymers, of nucleating agents as a further component.

6. A process for producing stretch blow molded containers as claimed in any of claims 1 to 5, where the metallocene complex (Ic) is dimethylsilanedilybis[3,3'-(2-methylbenzindenyl)]zirconium dichloride.

## Revendications

1. Procédé de production de conteneurs moulés par injection - soufflage avec étirage en polymérisats d'oléfines, par moulage par injection de pré-formes à des températures de fusion de 200 à 280°C, suivi d'un soufflage avec étirage des pré-formes à des températures de 100 à 160°C, **caractérisé en ce que** l'on souffle avec étirage des polymérisats d'oléfines contenant au moins 40 % en poids par rapport aux polymérisats d'oléfines, homopolymérisats du propylène ou copolymérisats du propylène avec d'autres alk-1-ènes en C₂-C₁₀, qui sont obtenus par polymérisations des monomères correspondants avec des catalyseurs à base de métallocènes_{,} contenant comme constituants actifs :
A) un ou plusieurs complexe(s) de métallocènes de formule générale (Ic) 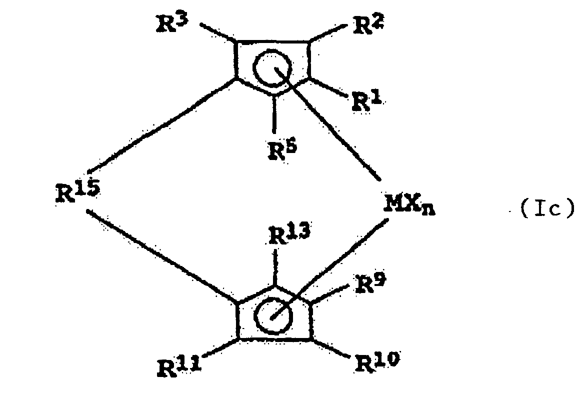 dans laquelle les substituants et les indices ont la signification suivante:
M : titane, zirconium, hafnium, vanadium, niobium ou tantale, ainsi que des éléments du groupe annexe III du Système Périodique et des lanthanides,
x : fluor, chlore, brome, iode, hydrogène, alkyle C₁-C₁₀, aryle C₆-C₁₅, alkylaryle avec 1 à 10 atomes de C dans le reste alkyle et 6 à 20 atomes de C dans le reste aryle, -OR⁶ ou -NR⁶R⁷,
n : 1, 2 ou 3, n correspondant à la valence de M moins le chiffre 2,
R6 et R7 représentent alkyle C₁-C₁₀, aryle C₆-C₁₅, alkylaryle, arylalkyle, fluoralkyle ou fluoraryle, avec à chaque fois 1 à 10 atomes de C dans le reste alkyle et 6 à 20 atomes de C dans le reste aryle, et
les restes X sont identiques ou différents
R¹, R⁵, R⁹ et R¹³ : hydrogène, alkyle en C₁-C₁₀, cycloalkyle à 5 à 7 membres qui, de son coté, peut être substitué par alkyle en C₁-C₁₀, aryle en C₆-C₁₅, ou alkylaryle ou Si(R⁸)3 avec
R8 : alkyle en C₁-C₁₀, cycloalkyle en C₃-C₁₀, ou aryle en C6-C15, et 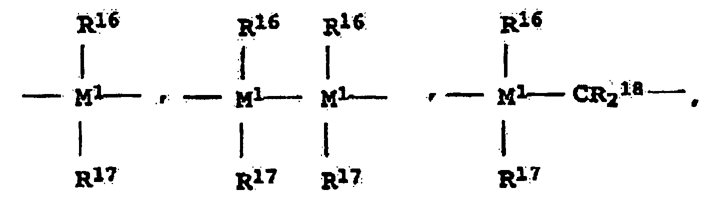 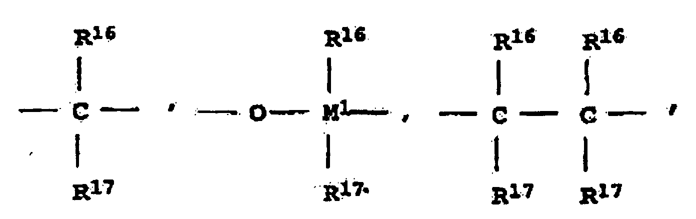
= BR¹⁶, =AIR¹⁶, -Ge-, -Sn-, -O-, -S-, = SO, =SO₂, = NR¹⁶, =CO, =PR¹⁶ ou =P(O)R¹⁶, R¹⁶, R¹⁷ et R¹⁸ étant identiques ou différents et représentant dans chaque cas un atome d'hydrogène, un atome d'halogène, un groupe alkyle en C₁-C₁₀, un groupe fluoroalkyle en C₁-C₁₀,, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C40, un groupe arylalcényle en C₈-C₄₀, ou un groupe alkylaryle C₇-C₄₀, ou deux restes voisins pouvant former dans chaque cas, avec les atomes qui les relient, un cycle comportant 15 atomes de C saturé ou insaturé, et
M¹ est silicium, germanium ou étain,
et deux restes R² et R³ voisins et deux restes R¹⁰ et R¹¹ voisins représentent, dans chaque cas, ensemble, un cycle saturé ou insaturé comportant 4 à 15 atomes de C, et
B) une ou plusieurs combinaison(s) formant des ions métallocénium.

2. Procédé pour la production de conteneurs par injection - soufflage avec étirage selon la revendication 1, dans lequel les polymérisats d'oléfines sont des homopolymérisats du propylène ou des copolymérisats du propylène avec d'autres alk-1-ènes en C₂-C₁₀, qui peuvent être obtenus par polymérisation des monomères correspondants avec des catalyseurs à base de métallocènes .

3. Procédé pour la production de conteneurs moulés par injection - soufflage avec étirage selon la revendication 1 ou 2, les homopolymérisats du propylène ou les copolymérisats du propylène avec d'autres alk-1-ènes en C₂-C₁₀ pouvant être obtenus avec des catalyseurs à base de métallocènes, présentant un point de fusion dans la plage de 120 à 165°C.

4. Procédé pour la production de conteneurs moulés par injection - soufflage avec étirage selon les revendications 1 à 3, les homopolymérisats du propylène ou les copolymérisats du propylène avec d'autres alk-1-ènes en C₂-C₁₀ pouvant être obtenus avec des catalyseurs à base de métallocènes, présentant une vitesse d'écoulement à l'état fondu VEF de 2 à 50 g/10 min, à 230°C sous un poids de 2,16 kg.

5. Procédé pour la production de conteneurs moulés par injection - soufflage avec étirage selon les revendications 1 à 4, les polymérisats d'oléfines contenant comme autre composant un agent de nucléation en quantités allant jusqu'à 5 % en poids par rapport aux polymérisats d'oléfines.

6. Procédé pour la production de conteneurs moulés par injection - soufflage avec étirage selon les revendications 1 à 5, le complexe de métallocène (Ic) étant le dichlorure de diméthylsilanediylbis (3,3' - (2 -méthylbenzindényl)) zirconium.
